# EUROPEAN PATENT SPECIFICATION

(11) **EP 4 265 995 B1**
(45) Date of publication and mention of the grant of the patent: **07.08.2024**
(21) Application number: 23169294.8
(22) Date of filing: 21.04.2023
(51) Int. Cl.: F28D 20/00

(54) **A COMPONENT FOR A THERMAL SYSTEM COMPRISING CALCIUM LACTATE FOR THERMOCHEMICAL HEAT ACCUMULATION**
KOMPONENT FUER EIN THERMISCHES SYSTEM MIT KALCIUMLAKTAT ALS THERMOCHEMISCHEM SPEICHER
COMPOSANT D'UN SYSTÈME THERMIQUE COMPRENANT DU LACTATE DE CALCIUM COMME ACCUMULATEUR THERMOCHIMIQUE

(30) Priority: 21.04.2022 IT 202200007847
(43) Date of publication of application: 25.10.2023
(73) Proprietor: Università Degli Studi Di Messina, 98122 Messina (IT)
(72) Inventor: MASTRONARDO, Emanuela, 98126 MESSINA (IT); PROVERBIO, Edoardo, 98168 MESSINA (IT); CALABRESE, Luigi, 98165 MESSINA (IT); PRESTIPINO, Mauro, 98121 MESSINA (IT); MILONE, Candida, 98121 MESSINA (IT); PIPEROPOULOS, Elpida, 98135 MESSINA (IT)
(74) Representative: de Alteriis, Renato

(56) References cited:
- WO-A1-2019/038292
- CN-A- 106 260 600
- DESAI FENIL ET AL: "Thermochemical energy storage system for cooling and process heating applications: A review", ENERGY CONVERSION AND MANAGEMENT, ELSEVIER SCIENCE PUBLISHERS, OXFORD, GB, vol. 229, 28 December 2020 (2020-12-28), XP086466489, ISSN: 0196-8904, [retrieved on 20201228], DOI: 10.1016/J.ENCONMAN.2020.113617
- ANONYMOUS: "NOW Foods, Calcium Lactate, 250 Tablets", 30 May 2007 (2007-05-30), pages 1 - 10, XP055978478, Retrieved from the Internet <URL:https://de.iherb.com/pr/now-foods-calcium-lactate-250-tablets/465?gclid=CjwKCAiA9qKbBhAzEiwAS4yeDRIOAvCoiKGSa8SQ66foq_hnHRwVwdd1u56masdzfutpb_Tn0vIp2xoC8bsQAvD_BwE&gclsrc=aw.ds> [retrieved on 20221107]

## Description

### Field of the invention

The present invention relates to the field of thermochemical heat accumulation. In particular, the invention relates to a component, in particular for a thermal machine or a thermal system, comprising a material for the thermochemical accumulation of heat, as defined in the preamble of claim 1, and as illustrated in DESAI FENIL ET AL: "Thermochemical energy storage system for cooling and process heating applications: A review",ENERGY CONVERSION AND MANAGEMENT, ELSEVIER SCIENCE PUBLISHERS, OXFORD, GB, vol. 229, 28 December 2020 (2020-12-28), ISSN: 0196-8904, DOI: 10.1016/ J.ENCONMAN.2020.113617.

### Background art

The thermochemical accumulation of heat is based on materials cyclically subject to reversible reactions which allow storing thermal energy in the form of chemical energy.

The thermochemical accumulation of heat at low temperatures is a key technology for promoting a more efficient use of energy from renewable sources, so as to foster the energy transition towards carbon-free renewable energy sources which are inherently intermittent. For example, solar energy is the main source of renewable energy, but the diurnal nature thereof generates a discrepancy between energy demand and supply. Therefore, the development of an efficient technology which allows storing low-grade thermal energy and provides it on demand would ensure energy security. Currently, thermochemical heat accumulation technologies at low temperatures are based on inorganic salt hydrates, which involve a reversible solid-gas reaction:

A·mH₂O₍ₛ₎⇄A·(m-n)H₂O₍ₛ₎₊nH₂O_{(g)} (m≥n)

The reagent (the solid hydrate salt) is converted, through an endothermic process (heat accumulation step), into products consisting of a totally or partially dehydrated solid salt and water in the vapor phase. To avoid the recombination of the products, the water is withdrawn and stored for reuse during the discharge step. Since the inverse rehydration reaction of the dehydrated salt with water vapor is exothermic, it releases heat on demand. The rehydration reaction is completely reversible if the salt recovers the total number of crystalline water molecules.

However, disadvantageously, in some cases, the hydration product is a saturated saline solution instead of a saline hydrate. This process is referred to as deliquescence, i.e., a substance which absorbs water vapor from the environment and gradually dissolves in the absorbed water to form a solution at a critical relative humidity value, referred to as the relative humidity of deliquescence. The phenomenon of deliquescence involves some serious drawbacks, such as chemical instability. A liquid film is formed on the surface of the salt crystal which inhibits the rehydration reaction (for example in the case of LiCl, LiBr, CaCl₂). Therefore, the mass transfer of sorbate into the system will be hindered, causing problems such as high pressure drops and eventually system failures, but also corrosion problems due to the dripping of the saline solution onto other metal components of the systems.

Therefore, the need is felt to overcome the limits of the prior art.

### Summary of the invention

It is an object of the present invention to improve the thermochemical accumulation of heat.

In particular, it is an object of the present invention to make a component for a thermal machine or for a thermal system capable of accumulating heat better than in the prior art.

It is another object of the present invention to avoid the occurrence of deliquescence, and therefore the problems related to such a phenomenon, allowing a more efficient and lasting operation.

The present invention achieves at least one of such objects, and other objects which will be apparent in the light of the present description, by means of a component according to claim 1.

In the present description, "first material" means a material comprising or consisting of calcium lactate, optionally also comprising thermally conductive particles, adapted to conduct heat.

"Second material" means a material different from said first material.

"Composite material" means a material comprising the second material in which particles of the first material are included; in particular so that the second material forms a matrix for the first material.

Advantageously, calcium lactate (pentahydrate/anhydrous) is a poorly soluble organic hydrate salt in the presence of water vapor. Advantageously, calcium lactate has poor solubility even at relative humidity (RH) values equal to 100%. This feature thereof prevents unfavorable deliquescence phenomena during operating conditions. Moreover, calcium lactate ensures a high capacity for heat accumulation/release, in particular in the temperature range from 10 to 200 °C, more in particular from 20 to 120 °C, at different relative humidity conditions, making the use thereof possible for heat accumulation and release at low temperatures, such as in a solar thermal system.

The thermal accumulation capacity of calcium lactate was measured and was advantageously approximately 815 kJ/kg.

Advantageously, calcium lactate is non-toxic, is obtainable at low cost and is easily available.

To date, calcium lactate has never been identified or suggested as a material for the accumulation of thermal energy.

In general, the invention relates to the use of calcium lactate for the thermochemical accumulation of heat, in particular the use of a material comprising calcium lactate for the thermochemical accumulation of heat.

The aforesaid component can be, for example, a heat exchanger or it can be a container, in particular a reactor, with said first material therein; optionally a heat exchanger is also arranged in the reactor.

For example, the component can be provided with a coating or pellets or one or more blocks made of said first material or comprising said first material.

Advantageously, the component can be integrated in a thermal system adapted to provide energy, in particular thermal energy, to a user.

Such a thermal system is adapted to be connected to a thermal energy source adapted to provide heat to the user and the component (in particular to said first material).

The thermal system further comprises means for treating a gaseous fluid, preferably air, which serve to modify the humidity of the gaseous fluid of a gaseous fluid flow adapted to lap the first material, so as to hydrate and dehydrate it. Advantageously, the component is particularly useful when the thermal energy source is discontinuous, in particular when the thermal energy produced by the thermal energy source is variable (more in particular when the thermal load is not always synchronized with the electrical load), for example when the thermal energy source is a solar thermal system with panels or a concentrated solar thermal system at low temperature, or a cogeneration system with reciprocating motors. Indeed, the first material can accumulate heat when the thermal energy source is capable of generating heat, and can release heat, when needed, when the thermal energy source does not produce (or does not produce enough) heat.

The invention further relates to a thermal system, in particular according to claim 12.

A thermal system can be, for example, a (fixed or movable) system for air conditioning services (for example winter or summer) of spaces. In particular, the thermal system can or cannot provide for the production of domestic hot water, or can only be for the production of domestic hot water, regardless of the energy carrier used, and can comprise any systems for the production, distribution, accumulation and use of heat as well as the adjustment and control members. Possibly, the thermal system can be combined with ventilation systems.

Further features and advantages of the invention will become more apparent in the light of the detailed description of exemplary, but non-exclusive embodiments thereof.

The dependent claims describe particular embodiments of the invention.

### Brief description of the drawings

In the description of the invention, reference is made to the accompanying drawings, which are provided by way of non-limiting example, in which:
Fig. 1 diagrammatically shows an example of a component according to the invention;
Fig. 1A diagrammatically shows another example of a component according to the invention;
Fig. 1B diagrammatically shows another example of a component according to the invention;
Fig. 1C diagrammatically shows another example of a component according to the invention;

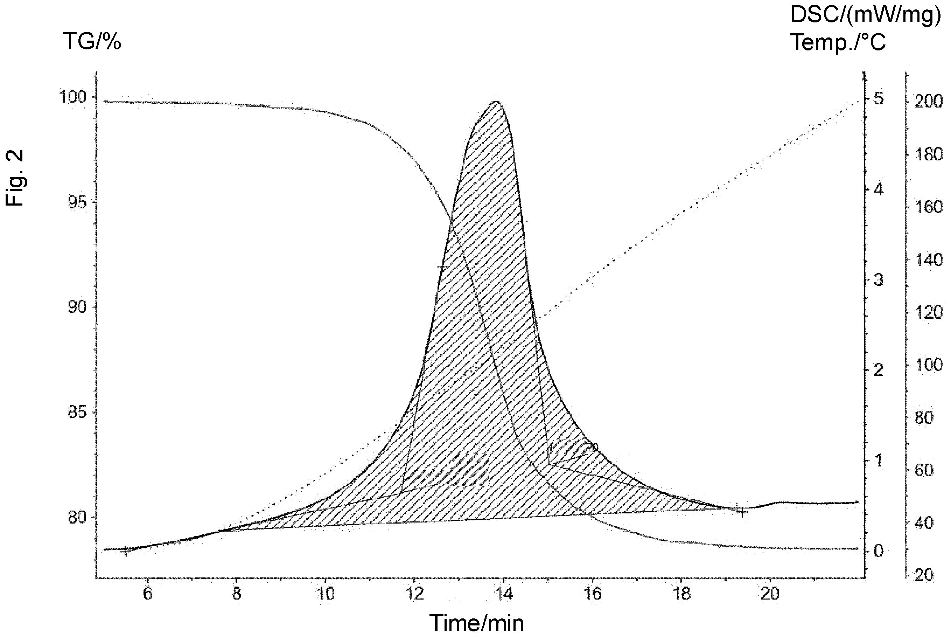

Fig. 2 shows a graph of a thermogravimetric/differential scanning calorimetry analysis of calcium lactate pentahydrate conducted in an inert gas flow (nitrogen 100 ml/min) in the range of 30-200 °C;

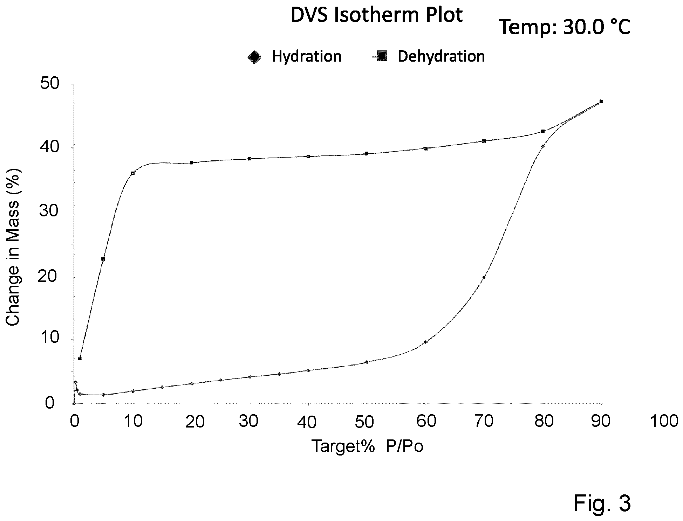

Fig. 3 shows a graph of a dynamic analysis of the water vapor absorption/release of calcium lactate under isothermal conditions (30 °C) as the relative humidity varies in the range of 0-90%;
Fig. 4 diagrammatically shows an example of a thermal system according to the invention;
Fig. 5 diagrammatically shows another particular example of a thermal system according to the invention.

The same elements, or functionally equivalent elements, have the same reference numeral.

### Description of embodiments of the invention

With reference to the Figures, exemplary embodiments of a component 1 or a device according to the invention are described.

In particular, the component 1 is a component for a thermal system 20, 30 or for a thermal machine.

The component 1 advantageously comprises a material (referred to as "first material" for descriptive purposes) comprising calcium lactate for the accumulation of thermochemical heat.

In particular, the first material is preferably arranged so as to come into contact with a gaseous fluid flow (preferably air), the fluid flow being for example generated by ventilation means (which can be part of the thermal system) and preferably being treated by treatment means adapted to treat a gaseous fluid flow.

Preferably, at least 75% by weight of the first material is calcium lactate, in particular pentahydrate. Optionally, the first material consists of calcium lactate.

Said first material can absorb water, in particular in the vapor state, and then release the absorbed water.

In particular, said first material is adapted to absorb water to release heat, and is adapted to release the absorbed water to accumulate heat.

More in particular, it has been observed that calcium lactate pentahydrate dehydration can occur, for example from 30°C in air with 10% RH (or for example also at 60°C with 20% RH). The hydration of anhydrous calcium lactate, resulting in heat release, occurs for example from 22°C with 100% RH.

Advantageously, calcium lactate (pentahydrate/anhydrous) is capable of accumulating and releasing heat under isothermal conditions as relative humidity (RH) conditions vary. Moreover, the relative humidity conditions under which heat accumulates and those under which heat is released are extreme with respect to one another. This prevents the accumulated heat from being dissipated.

In particular, the aforesaid first material is in the solid form.

The component 1 can comprise, for example, a coating (e.g., one or more parts provided with coating), pellets or one or more blocks made of said first material or comprising said first material.

The first material can optionally comprise, in addition to calcium lactate, particles adapted to conduct heat (also referred to as thermally conductive particles), for example a thermally conductive additive or filler.

Advantageously, said thermally conductive particles improve the heat transfer capacity of the first material.

Said particles are preferably present up to 25% by weight of the first material; preferably up to 12% by weight of the first material. In particular, it is preferable that said thermally conductive particles are present from 5 to 25% by weight of the first material. For example, such particles can be present from 8 to 12% by weight of the first material. The remaining part of the first material is preferably calcium lactate, in particular calcium lactate pentahydrate.

Said thermally conductive particles can be, for example, in the form of powder or grains.

Preferably said thermally conductive particles are graphite, or graphene, or carbon nanotubes, or a metal. The graphite can be exfoliated graphite or reduced graphite oxide.

Preferably, said metal is in the form of powder.

Preferably, said metal is selected from aluminum, copper, silver and silicon carbide.

In a non-limiting example, the first material consists of: 90% by weight of calcium lactate pentahydrate (mass, for example = 4.5 g) and 10% by weight of exfoliated graphite (mass, for example = 0.5 g).

In another non-limiting example, the first material consists of: 95% by weight of calcium lactate pentahydrate (mass, for example = 4.75 g) and 5% by weight of carbon nanotubes (mass, for example = 0.25 g).

In a further non-limiting example, the first material consists of: 75% by weight of calcium lactate pentahydrate (mass, for example = 3.75 g) and 25% by weight of exfoliated graphite (mass, for example = 1.25 g).

The component 1 can be made in various manners, some of which are described, in particular, below.

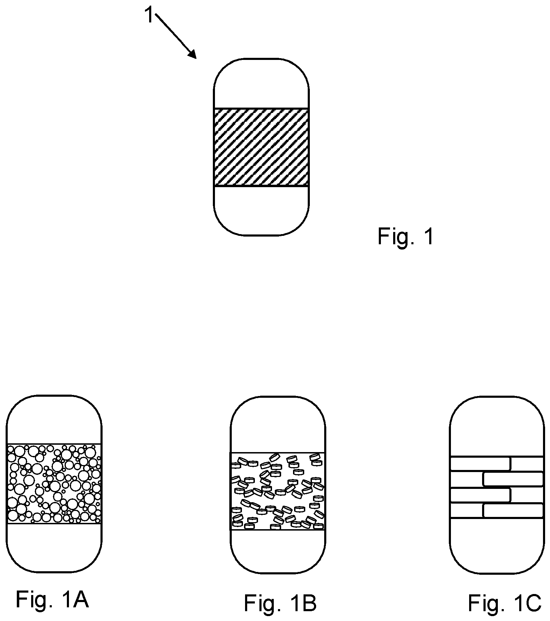

For example, Fig. 1A diagrammatically shows a variant wherein the component is a porous heat exchanger, i.e., provided with a plurality of pores, and said first material is present inside the pores (and therefore calcium lactate is present inside the pores).

Fig. 1B diagrammatically shows a variant wherein the component is a reactor containing pellets therein made of said first material, for example pellets made of calcium lactate.

Fig. 1C diagrammatically shows a variant wherein the component is a reactor inside which it is arranged a heat exchanger coated with said first material; in particular coated with calcium lactate.

A component according to the invention can be, for example, a heat exchanger provided with fins or plates coated with said first material; said heat exchanger can be arranged, for example but not exclusively, in a reactor (as in the example of Fig. 1C).

The component 1 can optionally comprise a second material, different from the first material. Particles of said first material (comprising calcium lactate) are included in said second material. In particular, said second material forms a matrix for the particles of said first material.

The second material is preferably chemically inert, in particular so as to form a chemically inert matrix.

The second material can be a foam, for example.

Merely by way of non-limiting example, the second material can be silicone, clay, silicon, polyethylene, aluminum or graphite.

Both the first material and the composite material comprising the first material can be used to make pellets or one or more blocks. For example, the pellets or the one or more blocks can be contained in the component 1 according to the invention. A composite material can be made, for example, with a process comprising the following steps:
a) calcium carbonate is dissolved in deionized water, obtaining a solution;
b) the second material, i.e., the matrix, is added in the same solution;
c) lactic acid is slowly added to the solution placed under magnetic stirring, which is maintained until the solution becomes semi-solid;
d) the semi-solid mixture is filtered and then dried at room temperature in a dryer for 24 hours;
e) after drying, the composite material is finely ground with mortar and pestle and placed in the oven at 35°C for 12 h.

The material is then used to obtain a coating or pellets or blocks.

The component 1 optionally comprises a coating, in particular an outer coating or an inner coating. Said coating can be made of said first material (i.e., consisting of said first material) or can be made of composite material comprising said second material in which particles of said first material are included.

The component 1 can optionally have a plurality of pores, and said first material can optionally be present inside said pores.

For example, the component 1 can comprise a part provided with said plurality of pores, for example a honeycomb part. Said part is preferably made of metal.

The component 1 can be a heat exchanger or a container, in particular a reactor.

The reactor can contain, for example, said first material therein (included or not included in said second material). A heat exchanger can optionally be arranged in the reactor.

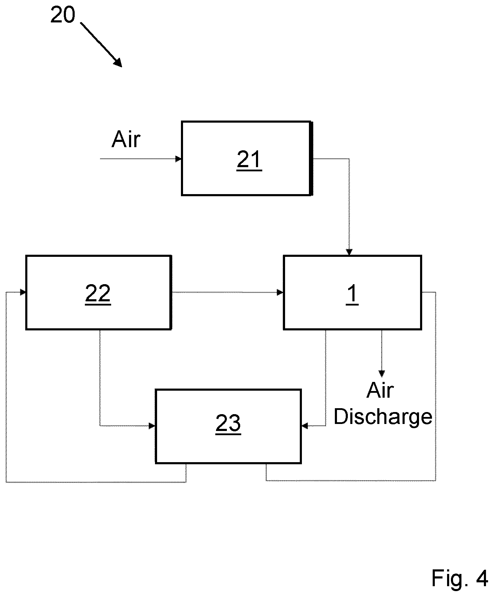

Fig. 4 diagrammatically shows a thermal system 20 for the accumulation and release of heat, comprising
- a component 1;
- air treatment means 21, for example an air treatment unit 21, adapted to modify the air humidity of an air flow which can come into contact with said first material of the component 1.

The thermal system 20 is adapted to be connected to a thermal energy source 22 adapted to provide heat to the user 23 and to the component 1, in particular to the first material provided with the component 1.

The system 20 is adapted to be connected to a user 23 who can receive heat from the component 1 and/or from the thermal energy source 22 according to the operating conditions.

The component 1 is preferably a reactor, inside which said first material is present, for example in the form of pellets, or of one or more blocks, or of coating. For example, the coating coats one or more inner surfaces of the reactor.

The reactor preferably comprises an inlet and an outlet for a gaseous fluid flow, preferably air.

Optionally, a heat exchanger is also provided inside the reactor.

As already mentioned, instead of a reactor, the component 1 can be a heat exchanger.

The air treatment unit 21 is adapted to treat the air entering into the component 1 and which will come into direct contact with the first material, so as to modify the humidity conditions of the air in the different heat accumulation and release (dehydration/hydration) steps and at the different temperatures at which the same air will be available. The thermal energy source 22 (or heat source) is in particular adapted to provide heat to the component 1 so as to heat the air for heat accumulation. The type of thermal carrier can be selected according to the heat source 22. The thermal carrier can be for example in gaseous form (hot air, hot fumes or water vapor, either saturated or superheated) or liquid form (hot or superheated water). Depending on the final application and the features of the user 23, several process configurations can be provided.

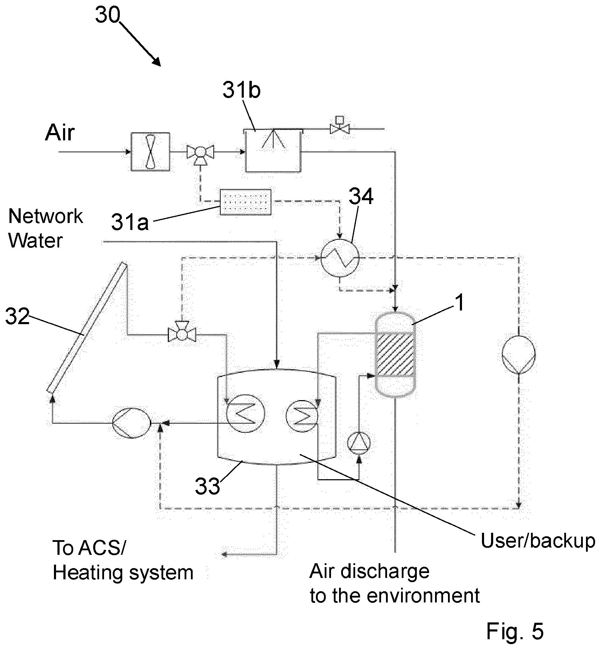

Fig. 5 diagrammatically shows a thermal system 30 comprising a component 1, wherein the heat source is a solar thermal system 32, in particular at low temperature.

The thermal system 30 is a particular example of a thermal system 20.

The thermal system 30 is adapted to perform a thermochemical heat accumulation cycle based on calcium lactate (pentahydrate/anhydrous).

A dryer 31a and a humidifier 31b (which are air treatment means) are provided.

In particular, the thermal system 30 is configured so that the air to be introduced into the component 1 (or in any case adapted to come into contact with the first material) is alternatively treated in the dryer 31a and in the humidifier 31b, in the thermal energy accumulation step (dehydration, dashed line) and release step (hydration, continuous line), respectively.

During the accumulation step (dashed line), the air is heated through an exchanger 34 the hot side of which is represented by the carrier fluid of the solar circuit. The hot air then comes into contact with the calcium lactate deposited in the component 1. Once dehydrated, the first material is considered ready for the hydration step and therefore for the release of the accumulated heat. The airflow exiting from the component 1 is expelled into the environment.

During the release step (solid line) of the accumulated heat, the ambient air is humidified by means of the humidifier 33 so as to favor the rehydration of the calcium lactate and is then introduced into the component 1. Advantageously, a high degree of relative humidity (preferably > 60%) allows rehydration at moderately high temperatures (preferably between 20 and 60°C). The heat released during the hydration step is subtracted by means of a carrier fluid placed in circulation between the user 33 and the component 1. Even in the hydration step the humid air in contact with the first material is expelled into the environment.

In hot air heating systems for spaces, the aforesaid first material can be deposited for example on porous monoliths, for example but not limited to the honeycomb type, exchanging moist air required for the hydration of the material with the material itself. Since the hydration process is exothermic, the air will be heated by convection and thus used for heating spaces upon a possible dehydration treatment up to the required environmental comfort conditions.

In the case of domestic hot water production or space heating by means of radiant systems, the aforesaid first material can be deposited, for example, in heat exchangers wherein the heat transfer fluid is water. For example, the heat exchanger can be a finned tube exchanger or a plate exchanger.

## Claims

1. A component (1) for a thermal system (20, 30) or a thermal machine, the component (1) comprising a first material for the thermochemical accumulation of heat;
the component (1) being a heat exchanger or a container, in particular a reactor, containing said first material therein, the component being **characterized in that** the first material comprises or consists of calcium lactate.

2. A component (1) according to claim 1, wherein said first material further comprises thermally conductive particles.

3. A component (1) according to claim 2, wherein said thermally conductive particles are graphite, or graphene, or carbon nanotubes, or a metal.

4. A component (1) according to claim 3, wherein said metal is selected from aluminum, copper, silver, and silicon carbide.

5. A component (1) according to any one of claims 2 to 4, wherein said thermally conductive particles are present up to 25%, preferably up to 12%, by weight of the first material; preferably wherein said thermally conductive particles are present from 5 to 25% or from 8 to 12% by weight of the first material.

6. A component (1) according to any one of the preceding claims, wherein at least 75% by weight of the first material is calcium lactate.

7. A component (1) according to any one of the preceding claims, comprising a second material, different from the first material;
wherein particles of said first material are included in said second material; in particular, wherein said second material forms a matrix for the particles of said first material.

8. A component (1) according to claim 7, wherein said second material is silicone, clay, silicon, polyethylene, aluminum, or graphite.

9. A component (1) according to any one of the preceding claims, comprising a coating and wherein said coating is made of said first material or a composite material comprising said first material.

10. A component (1) according to any one of the preceding claims, having a plurality of pores, and wherein said first material is present inside said pores; in particular, wherein particles of said first material are present inside said pores.

11. A component (1) according to any one of the preceding claims, comprising therein a coating or pellets or one or more blocks made of said first material or a composite material comprising said first material.

12. A thermal system (20, 30) for accumulating and releasing heat, comprising a component (1) according to any one of the preceding claims;
the thermal system (20, 30) being adapted to be connected to a thermal energy source (23, 33) adapted to supply heat to the first material;
and being adapted to be connected to a user (23) capable of receiving heat from the component (1).

13. A thermal system (20, 30) according to claim 12, further comprising means (21, 31a, 31b) for treating a gaseous fluid, in particular air, adapted to modify the gaseous fluid humidity of a gaseous fluid flow which can come into contact with said first material of the component (1).

14. A thermal system according to claim 12 or 13, comprising said thermal energy source (23, 33).

15. A thermal system according to claim 12, 13 or 14, wherein said thermal energy source (23) is a solar thermal system, in particular with panels or a concentrated solar thermal system, or a cogeneration system.

## Patentansprüche

1. Komponente (1) für ein thermisches System (20, 30) oder eine thermische Maschine, wobei die Komponente (1) ein erstes Material zur thermochemischen Speicherung von Wärme umfasst;
wobei die Komponente (1) ein Wärmetauscher oder ein Behälter, insbesondere ein Reaktor, ist, der das erste Material darin enthält, wobei die Komponente **dadurch gekennzeichnet ist, dass** das erste Material Calciumlactat umfasst oder daraus besteht.

2. Komponente (1) nach Anspruch 1, wobei das erste Material ferner wärmeleitende Partikel umfasst.

3. Komponente (1) nach Anspruch 2, wobei die wärmeleitenden Partikel Graphit oder Graphen oder Kohlenstoff-Nanoröhrchen oder Metall sind.

4. Komponente (1) nach Anspruch 3, wobei das Metall aus Aluminium, Kupfer, Silber und Siliziumkarbid ausgewählt ist.

5. Komponente (1) nach einem der Ansprüche 2 bis 4, wobei die wärmeleitenden Partikel in bis zu 25 Gew.-%, vorzugsweise bis zu 12 Gew.-% des ersten Materials vorhanden sind; wobei die wärmeleitenden Partikel vorzugsweise von 5 bis 25 Gew.-% oder von 8 bis 12 Gew.-% des ersten Materials vorhanden sind.

6. Komponente (1) nach einem der vorhergehenden Ansprüche, wobei mindestens 75 Gew.-% des ersten Materials Calciumlactat sind.

7. Komponente (1) nach einem der vorhergehenden Ansprüche, die ein zweites Material, das sich von dem ersten Material unterscheidet, umfasst;
wobei Partikel des ersten Materials in dem zweiten Material beinhaltet sind; wobei das zweite Material insbesondere eine Matrix für die Partikel des ersten Materials bildet.

8. Komponente (1) nach Anspruch 7, wobei das zweite Material Silikon, Ton, Silizium, Polyethylen, Aluminium oder Graphit ist.

9. Komponente (1) nach einem der vorhergehenden Ansprüche, die eine Beschichtung umfasst und wobei die Beschichtung aus dem ersten Material oder einem Verbundstoff besteht, der das erste Material umfasst.

10. Komponente (1) nach einem der vorhergehenden Ansprüche, die eine Vielzahl von Poren aufweist und wobei das erste Material im Inneren der Poren vorhanden ist; insbesondere wobei Partikel des ersten Materials im Inneren der Poren vorhanden sind.

11. Komponente (1) nach einem der vorhergehenden Ansprüche, die eine Beschichtung oder Pellets oder einen oder mehrere Blöcke aus dem ersten Material oder einen Verbundstoff umfasst, der das erste Material umfasst.

12. Thermisches System (20, 30) zum Speichern und Abgeben von Wärme, das eine Komponente (1) nach einem der vorhergehenden Ansprüche umfasst; wobei das thermische System (20, 30) dazu geeignet ist, mit einer Wärmeenergiequelle (23, 33) verbunden zu werden, die dazu geeignet ist, dem ersten Material Wärme zuzuführen;
und dazu geeignet ist, mit einem Verbraucher (23) verbunden zu werden, der zum Empfangen von Wärme von der Komponente (1) in der Lage ist.

13. Thermisches System (20, 30) nach Anspruch 12, das ferner Mittel (21, 31a, 31b) zum Behandeln eines gasförmigen Fluids, insbesondere Luft, umfasst, die dazu geeignet sind, die Feuchtigkeit des gasförmigen Fluids in einem gasförmigen Fluidstrom zu modifizieren, der mit dem ersten Material der Komponente (1) in Kontakt kommen kann.

14. Thermisches System nach Anspruch 12 oder 13, das eine Wärmeenergiequelle (23, 33) umfasst.

15. Thermisches System nach Anspruch 12, 13 oder 14, wobei die Wärmeenergiequelle (23) ein solarthermisches System, insbesondere mit Paneelen, oder ein konzentriertes solarthermisches System oder ein Kraft-Wärme-Kopplungssystem ist.

## Revendications

1. Composant (1) pour un système thermique (20, 30) ou une machine thermique, le composant (1) comprenant un premier matériau pour l'accumulation thermochimique de chaleur ;
le composant (1) étant un échangeur de chaleur ou un récipient, en particulier un réacteur, contenant ledit premier matériau à l'intérieur, le composant étant **caractérisé en ce que** le premier matériau comprend ou est constitué de lactate de calcium.

2. Composant (1) selon la revendication 1, dans lequel ledit premier matériau comprend en outre des particules thermiquement conductrices.

3. Composant (1) selon la revendication 2, dans lequel lesdites particules thermiquement conductrices sont du graphite, ou du graphène, ou des nanotubes de carbone, ou un métal.

4. Composant (1) selon la revendication 3, dans lequel ledit métal est choisi parmi l'aluminium, le cuivre, l'argent et le carbure de silicium.

5. Composant (1) selon l'une quelconque des revendications 2 à 4, dans lequel lesdites particules thermiquement conductrices sont présentes jusqu'à 25 %, de préférence jusqu'à 12 %, en poids du premier matériau ; de préférence dans lequel lesdites particules thermiquement conductrices sont présentes de 5 à 25 % ou de 8 à 12 % en poids du premier matériau.

6. Composant (1) selon l'une quelconque des revendications précédentes, dans lequel au moins 75 % en poids du premier matériau est du lactate de calcium.

7. Composant (1) selon l'une quelconque des revendications précédentes, comprenant un deuxième matériau, différent du premier matériau ;
dans lequel des particules dudit premier matériau sont incluses dans ledit deuxième matériau ; en particulier, dans lequel ledit deuxième matériau forme une matrice pour les particules dudit premier matériau.

8. Composant (1) selon la revendication 7, dans lequel ledit deuxième matériau est de la silicone, de l'argile, du silicium, du polyéthylène, de l'aluminium ou du graphite.

9. Composant (1) selon l'une quelconque des revendications précédentes, comprenant un revêtement et dans lequel ledit revêtement est constitué dudit premier matériau ou d'un matériau composite comprenant ledit premier matériau.

10. Composant (1) selon l'une quelconque des revendications précédentes, ayant une pluralité de pores, et dans lequel ledit premier matériau est présent à l'intérieur desdits pores ; en particulier, dans lequel des particules dudit premier matériau sont présentes à l'intérieur desdits pores.

11. Composant (1) selon l'une quelconque des revendications précédentes, comprenant à l'intérieur un revêtement ou des granulés ou un ou plusieurs blocs constitués du dudit premier matériau ou d'un matériau composite comprenant ledit premier matériau.

12. Système thermique (20, 30) pour accumuler et libérer de la chaleur, comprenant un composant (1) selon l'une quelconque des revendications précédentes ;
le système thermique (20, 30) étant adapté pour être connecté à une source d'énergie thermique (23, 33) adaptée pour fournir de la chaleur au premier matériau ;
et étant adapté pour être connecté à un utilisateur (23) capable de recevoir de la chaleur du composant (1).

13. Système thermique (20, 30) selon la revendication 12, comprenant en outre des moyens (21, 31a, 31b) pour traiter un fluide gazeux, en particulier de l'air, adaptés pour modifier l'humidité du fluide gazeux d'un écoulement de fluide gazeux qui peut entrer en contact avec ledit premier matériau du composant (1).

14. Système thermique selon la revendication 12 ou 13, comprenant ladite source d'énergie thermique (23, 33).

15. Système thermique selon la revendication 12, 13 ou 14, dans lequel ladite source d'énergie thermique (23) est un système solaire thermique, en particulier avec des panneaux ou un système solaire thermique concentré, ou un système de cogénération.
